# EUROPÄISCHE PATENTSCHRIFT

(11) **EP 1 789 696 B1**
(45) Veröffentlichungstag und Bekanntmachung des Hinweises auf die Patenterteilung: **04.11.2009**
(21) Anmeldenummer: 05790155.5
(22) Anmeldetag: 31.08.2005
(51) Int. Cl.: F16D 65/56

(54) **SCHEIBENBREMSE MIT EINER NACHSTEILLVORRICHTUNG INSBESONDERE F]R NUTZFAHRZEUGE**
DISK BRAKE COMPRISING A READJUSTING DEVICE, ESPECIALLY FOR UTILITY VEHICLES
FREIN A DISQUE POURVU D'UN DISPOSITIF DE RATTRAPAGE DE JEU DESTINE EN PARTICULIER A DES VEHICULES UTILITAIRES

(30) Priorität: 02.09.2004 DE 102004042574
(43) Veröffentlichungstag der Anmeldung: 30.05.2007
(73) Patentinhaber: KNORR-BREMSE Systeme für Nutzfahrzeuge GmbH, 80809 München (DE)
(72) Erfinder: MACKE, Wlodzimierz, 82140 Olching (DE)
(74) Vertreter: Mattusch, Gundula
(86) Internationale Anmeldenummer: PCT/EP2005/009368
(87) Internationale Veröffentlichungsnummer: WO 2006/024511

(56) Entgegenhaltungen:
- US-A- 3 520 385
- US-A- 4 030 577
- US-A- 5 628 387
- US-A1- 2004 149 527

## Beschreibung

Die vorliegende Erfindung betrifft eine Scheibenbremse, insbesondere für Nutzfahrzeuge, gemäß dem Oberbegriff des Anspruchs 1.

Eine Scheibenbremse ist aus der WO 02/14 708 bekannt, die als Schiebesattel-, Schwenksattel- oder Festsattelbremse insbesondere auch mit verschiebbarer Bremsscheibe ausgebildet sein kann.

Zum Ausgleich eines Bremsbelag- und/oder Bremsscheibenverschleißes ist im Bremssattel ein Nachstellsystem angeordnet, durch das die Bremsbacken in Richtung der Bremsscheibe so verstellbar sind, dass der Abstand zwischen der Reibfläche der Bremsbeläge der Bremsbacken und der Bremsscheibe, das sogenannte Lüftspiel, vorzugsweise gleichbleibend gehalten wird.

In der genannten Druckschrift weist das Nachstellsystem wenigstens eine Nachstellvorrichtung in Form einer Dreheinrichtung auf, deren Antrieb in einer Ausführungsvariante elektromotorisch und in einer anderen Ausführungsform mechanisch erfolgt, im letzteren Fall bei Betätigung der Zuspanneinrichtung in Kopplung über einen Bremshebel.

Beiden Funktionsprinzipien gemeinsam ist, dass der Nachstellvorgang lastabhängig begrenzt wird, das heißt, die Nachstellung wird unterbrochen, sobald die Bremsbeläge reibschlüssig an der Bremsscheibe anliegen.

Naturgemäß ist die elektromotorische Verstellung mit einem gewissen konstruktiven und fertigungstechnischen Aufwand verbunden. Dies umfasst auch besondere Maßnahmen, die erforderlich sind, um den rauen Betriebsbedingungen gerecht zu werden, unter denen die Scheibenbremsen für Nutzfahrzeuge üblicherweise zum Einsatz kommen.

Die unmittelbare funktionale Abhängigkeit des Nachstellsystems von der Betätigung der Zuspannvorrichtung bietet keine Möglichkeit der Überwindung eines Überhubes. Der Überhub wird vielmehr u.U. erst bei mehrmaligem Betätigen des Nachstellsystems reduziert, so dass die Funktionsfähigkeit des Nachstellsystems nicht von Anfang an in optimaler Weise gegeben ist.

Überdies wird das Lüftspiel üblicherweise durch die Summierung vieler, beispielsweise fertigungsbedingter Einzeltoleranzen nachteilig beeinflusst, so dass auch dies einen optimierten Einsatz des Nachstellsystems behindert.

Eine gattungsgemäße Scheibenbremse ist aus der US 2004/0149 527 A1 bekannt, bei der die Spiralfeder über ein separates Zahnrad mit Zahnrädern der Stellspindeln im Eingriff steht. In der US 4 030 577 A ist eine Spiralfeder gezeigt und beschrieben, die an einem umschließenden, ortsfest gehaltenen Gehäuse und einer zentralen, drehbaren Hülse befestigt ist.

Der vorliegenden Erfindung liegt die Aufgabe zugrunde, eine Scheibenbremse der gattungsgemäßen Art so weiter zu entwickeln, dass mit konstruktiv geringem Aufwand die Funktion des Nachstellsystems optimiert wird.

Diese Aufgabe wird durch eine Scheibenbremse mit den Merkmalen des Anspruchs 1 gelöst.

Zunächst einmal zeichnet sich die neue Scheibenbremse dadurch aus, dass die Verbesserung der Funktionsfähigkeit des Nachstellsystems mit konstruktiv sehr einfachen Mitteln realisierbar ist. Neben der kostengünstigen Herstellung und Montage ist als weiterer Vorteil eine verbesserte Robustheit und geringere Störanfälligkeit hervorzuheben, die naturgemäß einen bemerkenswerten Einfluss auf eine höhere Standzeit hat.

Prinzipiell ist die Betätigung des Nachstellsystems, also der Dreheinrichtung, nur mittelbar abhängig von der Betätigung der Zuspanneinrichtung, das heißt, die Dreheinrichtung wird nur dann aktiv, wenn das Lüftspiel ein bestimmtes Sollmaß überschritten hat.

Die mechanische, lastabhängige Funktion des neuen Nachstellsystems ermöglicht die vollständige Überwindung eines möglicherweise vorhandenen Überhubs bereits während einer ersten Betätigung, woraus sich eine Verbesserung der Betriebssicherheit ergibt.

Auch die zum Stand der Technik angesprochene Summentoleranz, die sich aus der unmittelbaren Betätigung des Nachstellsystems mittels der Zuspanneinrichtung ergibt und die ebenfalls einer optimierten Funktion des Nachstellsystems entgegensteht, ist durch die Erfindung nicht mehr gegeben.

Gemäß der Erfindung ist die Spiralfeder in ihrem Zentrum an einem ortsfesten, vorzugsweise mit dem Bremssattel verbundenen Zapfen und außenseitig an einer konzentrisch dazu angeordneten, mit einer Außenverzahnung versehenen Hülse befestigt die mit dem Drehantrieb korrespondiert, wobei die Hülse im Funktionsfall der Innen liegenden Spiralfeder durch deren Federkraft um den Zapfen dreht.

Der Kraftspeicher steht in Verbindung mit einer Blockiereinrichtung, die dann entriegelt wird, wenn das Lüftspiel ein Sollmaß überschreitet.

In diesem Fall wird über die genannte Spiralfeder, die Dreheinrichtung in der Art betätigt, dass die angeschlossenen Bremsbeläge mittelbar an die Bremsscheibe herangefahren werden.

Bevorzugt erfolgt die Entriegelung der Blockiereinrichtung bei Betätigung der Zuspanneinrichtung durch einen Hebel oder ein anderes vorzugsweise daran angeschlossenes Bauteil.

Dabei kann die Blockiereinrichtung mit einer Scheibe achsverschieblich, jedoch verdrehsicher auf einer Welle gelagert sein und eine Planverzahnung aufweisen, die in eine daran angepasste, dem gegenüber ortsfeste, beispielsweise im Bremssattel vorgesehene Sperrverzahnung eingreift.

Auch hierbei ist der konstruktiv einfache Aufbau bemerkenswert, insbesondere, weil die Funktion des Nachstellsystems durch Betätigung der Zuspanneinrichtung ausgelöst wird, also hierfür keine zusätzlichen Funktionsteile erforderlich sind.

Die die Blockiereinrichtung tragende Welle kann als Koppelwelle ausgebildet sein, durch die im Fall, dass die Scheibenbremse als Festsattelbremse mit verschieblicher Bremsscheibe ausgebildet ist, beidseitig der Bremsscheibe angeordnete Nachstellvorrichtungen gleichzeitig aktiviert werden und zwar über einen gemeinsamen Kraftspeicher.

Dieser, vorzugsweise in Form der Spiralfeder, ist so ausgelegt, dass mit Abnutzung der Bremsbeläge sein Energievorrat, sprich die Federkraft, soweit verbraucht ist, dass eine letzte Nachstellung noch möglich ist. Durch erneutes Spannen der Spiralfeder, also Zurückdrehen entgegen der Drehrichtung im Funktionsfall, wird der Kraftspeicher wieder aufgeladen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 und 2: verschiedene Ausführungsbeispiele einer erfindungsgemäßen Scheibenbremse in einer teilweise geschnittenen Draufsicht
- Figur 3: eine Einzelheit der Scheibenbremse gesehen in Richtung des Pfeiles III in Figur 1

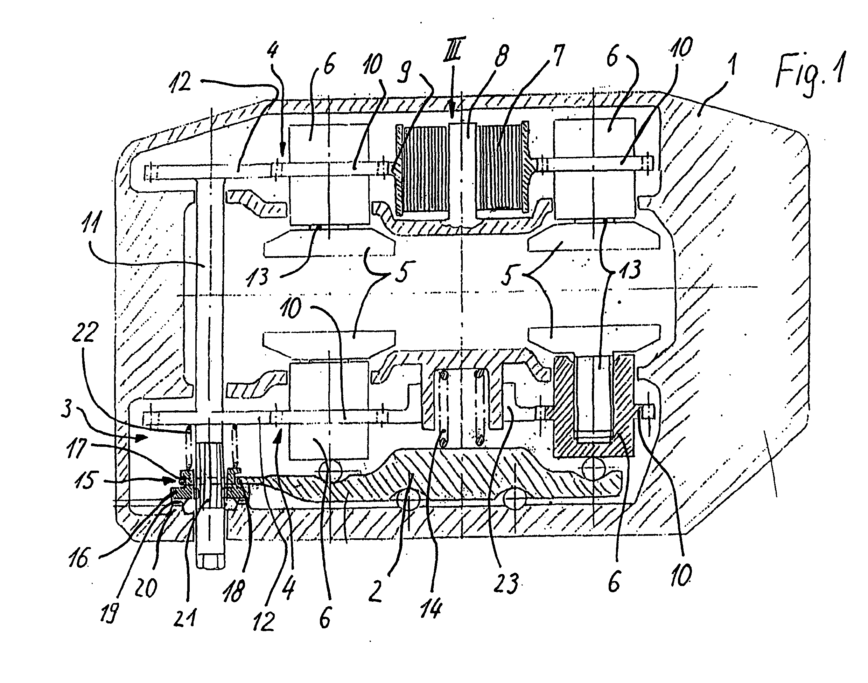

In der Figur 1 ist eine als Festsattelbremse ausgebildete Scheibenbremse gezeigt, mit einem fahrzeugseitig festlegbaren Bremssattel 1, der eine nicht dargestellte Bremsscheibe zumindest abschnittsweise an ihrem äußeren Umfang übergreift. Im Bremssattel 1 ist ein Teil einer Zuspanneinrichtung 2 angeordnet zum Andrücken eines hier nicht dargestellten Bremsbelages an die Bremsscheibe. Der Bremssattel 1 ist ein Festsattel, so dass die Bremsscheibe beweglich ausgelegt wird. Es ist auch denkbar, den Festsattel und die Bremsscheibe nur zur Überwindung des Krafthubes jeweils etwas beweglich zu gestalten.

Zum Einstellen eines Lüftspiels zwischen Bremsbacken und der Bremsscheibe ist ein Nachstellsystem 4 im Bremssattel 1 vorgesehen, das bei dem in der Figur 1 gezeigten Ausführungsbeispiel beidseits der Bremsscheibe jeweils eine Nachstellvorrichtung 4 in Form einer Dreheinrichtung aufweist.

Jede Nachstellvorrichtung 4 besteht aus zwei an den nicht dargestellten Bremsbacken anliegenden Druckstücken 5, die jeweils mittels einer angeschlossenen Gewindespindel 13 axial bewegbar in einer dieser gegenüber verdrehbaren Spindelmutter 6 gelagert sind.

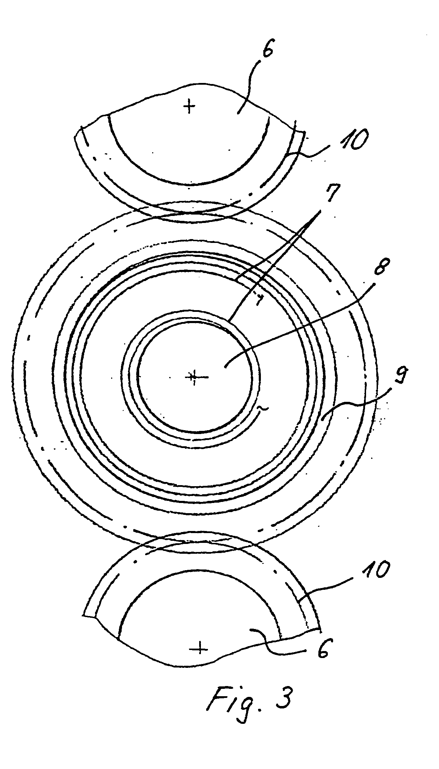

Als Antrieb für die Nachstellvorrichtungen 4, also die Dreheinrichtungen des gesamten Nachstellsystems 3, ist ein Kraftspeicher in Form einer Spiralfeder 7 vorgesehen, deren Aufbau in der Figur 3 besonders deutlich erkennbar ist.

Diese Spiralfeder 7 ist in ihrem Zentrum an einem ortsfesten Zapfen 8 des Bremssattels 1 befestigt, während sie außenseitig fest mit der Wandung einer Hülse 9 verbunden ist, die die Spiralfeder 7 mantelseitig umschließt. Bei gespannter Spiralfeder 7 ist die Hülse 9 durch die Federkraft um den Zapfen 8 drehbar.

Außenseitig weist die Hülse 9 eine Außenverzahnung auf, die die Zähne eines Zahnkranzes 10 der jeweiligen Spindelmuttern 6 kämmt, wobei die Hülse 9 zwischen zwei Spindelmuttern 6 angeordnet ist.

Der Zahnkranz 10 einer Spindelmutter 6 greift in die Zähne eines Zahnrades 12 ein, das an einer Welle 11, im Ausführungsbeispiel gemäß Figur 1 in Funktion einer Koppelwelle, angeschlossen ist, die eine von der Hülse 9 ausgehende Drehbewegung über ein weiteres Zahnrad 12 der Welle 11 auf die Zahnkränze 10 der gegenüberliegenden Spindelmuttern 6 der zweiten Nachstellvorrichtung 4 überträgt, wobei zur gleichsinnigen Drehbewegung dieser beiden Spindelmuttern 6 ein weiteres Zahnrad 23 zwischengeschaltet ist.

Bereichsweise ist die Welle 11 als Keilwelle 21 ausgebildet und trägt in diesem Bereich eine Blockiereinrichtung 15, die axial verschiebbar, jedoch verdrehsicher auf der Welle 11 gelagert ist.

Diese Blockiereinrichtung 15 weist eine Scheibe 16 auf, die mit einer Planverzahnung 19 versehen ist, die zur Blockierung der Welle 11 in eine Sperrverzahnung 20 eingreift, die in einem Abschnitt des Bremssattels 1, also ortsfest, vorgesehen ist.

Weiter ist die Scheibe 16 mit einer umlaufenden Ringnut 17 versehen, die in einen Mitnehmer 18 der Zuspanneinrichtung eingreift.

Die Höhe der Zähne der Planverzahnung 19 bzw. der Sperrverzahnung 20 entspricht vorzugsweise einem Sollmaß für das auszugleichende Lüftspiel zwischen den Bremsbelägen und der Bremsscheibe. Prinzipiell ist die Höhe der Verzahnung abhängig vom Verhältnis des Mitnehmerhubes zum entsprechenden Hub der Gewindespindel 13. Ist z.B. der Hub des Mitnehmers 18 größer als der Verstellweg der Gewindespindel 13, so ist die Verzahnungshöhe entsprechend größer zu wählen.

Bei Betätigung der Zuspanneinrichtung 2 und der Überwindung des Lüftspiels wird die Scheibe 16 mittels des Mitnehmers 18 auf der Keilwelle 21 der Welle 11 axial verschoben.

In dem Fall, dass das Lüftspiel größer ist als das Sollmaß, wird die Blockierung der Blockiereinrichtung aufgehoben, da die Höhe der Zähne der Planverzahnung 19 bzw. der Sperrverzahnung 20, wie erwähnt, dem Sollmaß des Lüftspiels entspricht, so dass die unter der Spannung der Spiralfeder 7 stehende Welle 11 durch die Federkraft der Spiralfeder 7 gedreht wird unter gleichzeitiger Drehung der Spindelmuttern 6 sowohl der oberen Nachstellvorrichtung 4 wie auch der unteren, bis die Bremsbeläge reibend an der Bremsscheibe anliegen. Damit ist die Korrektur des Lüftspiels bei einer einzigen Bremsbetätigung abgeschlossen.

Überschreitet das Lüftspiel das vorgegebene Sollmaß hingegen nicht, erfolgt mit dem Entriegeln der Blockiereinrichtung 15 unmittelbar nach Überwinden des Lüftspiels ein Andrücken der Bremsbeläge an die Bremsscheibe, wobei die Spiralfeder 7 nicht wirksam wird.

Nach einem Lösen der Bremse wird die Zuspannvorrichtung 2 über eine Rückholfeder 14 bzw. wird die Scheibe 16 mittels einer Druckfeder 22 zurückgebracht, letztere in eine Blockierstellung.

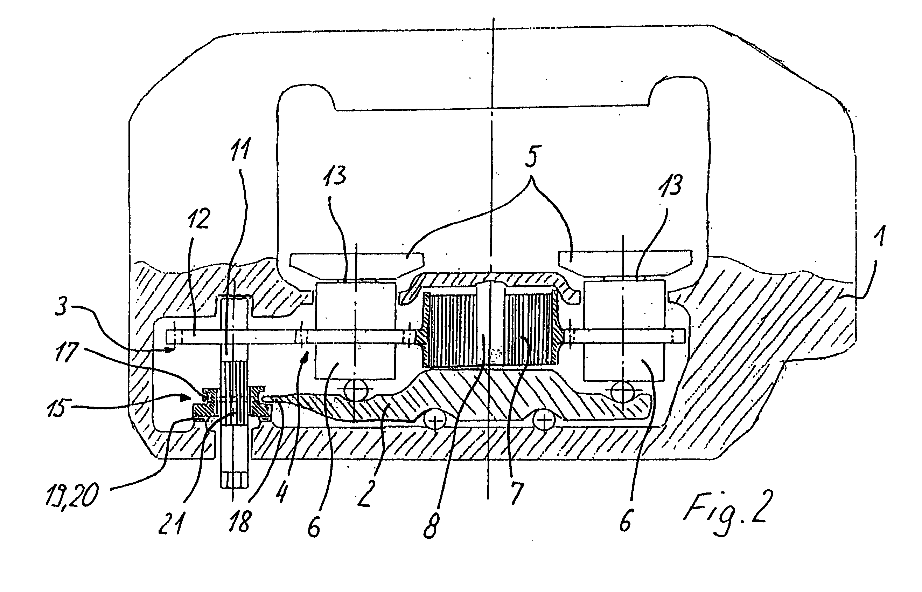

In der Figur 2 ist schematisch eine Schiebesattelbremse dargestellt, bei der das Nachstellsystem 3 lediglich einseitig eine Nachstellvorrichtung 4 aufweist, die prinzipiell dem Aufbau und der Funktion der in der Figur 1 gezeigten und beschriebenen entspricht. Alternativ wäre auch eine Schwenksattelbremse realisierbar.

Die Figur 3 schließlich zeigt eine Einzelheit der Scheibenbremse, in der die Anordnung der Spiralfeder 7 in der Hülse 9 und der Eingriff deren Außenverzahnung in die Zahnkränze 10 der benachbarten Spindelmuttern 6 deutlich erkennbar sind.

Anstelle der drehbaren Spindelmuttern 6 und der dazu feststehenden Gewindespindeln 13, entsprechend den dargestellten Ausführungsbeispielen, besteht selbstverständlich die Möglichkeit, die Spindelmuttern 6 feststehend zu positionieren und die Gewindespindeln 13 drehbar darin zu lagern, wobei dann die Zahnräder 12 der Welle 11 mit entsprechenden Verzahnungen der Gewindespindeln 13 korrespondieren.

Bei einem Belagwechsel werden die Gewindespindeln durch Verdrehen der Spindelmuttern 6 in eine Ausgangsposition zurückgestellt. Durch diese entgegengesetzte Drehung der Spindelmuttern 6 wird die Spiralfeder 7 erneut gespannt.

### Bezugszeichenliste

- 1: Bremssattel
- 2: Zuspanneinrichtung
- 3: Nachstellsystem
- 4: Dreheinrichtung
- 5: Druckstück
- 6: Spindelmutter
- 7: Spiralfeder
- 8: Zapfen
- 9: Hülse
- 10: Zahnkranz
- 11: Welle
- 12: Zahnrad
- 13: Gewindespindel
- 14: Rückstellfeder
- 15: Blockiereinrichtung
- 16: Scheibe
- 17: Ringnut
- 18: Mitnehmer
- 19: Planverzahnung
- 20: Sperrverzahnung
- 21: Keilwelle
- 22: Druckfeder
- 23: Zahnrad

## Patentansprüche

1. Scheibenbremse, insbesondere für Nutzfahrzeuge, mit einem eine Bremsscheibe zumindest abschnittsweise an ihrem äußeren Umfang übergreifenden Bremssattel (1), einer ganz oder teilweise im Bremssattel (1) angeordneten Zuspanneinrichtung (2) zum Zuspannen der Bremse, sowie einem im Bremssattel (1) angeordneten, wenigstens eine Nachstellvorrichtung (4) in Form eines Dreheinrichtung aufweisenden Nachstellsystems (3) zum Einstellen des Lüftspiels zwischen Bremsbacken und der Bremsscheibe, wobei als Antrieb für die Nachstellvorrichtung (4) ein eine Spiralfeder (7) aufweisender, aufladbarer Kraftspeicher vorgesehen ist und wobei die Betätigung des Kraftspeichers innerhalb eines Soll-Maßes des Lüftspiels mittels einer Blockiereinrichtung (15) blockierbar ist, **dadurch gekennzeichnet, dass** die Spiralfeder (7) in ihrem Zentrum an einem ortsfesten Zapfen (8) und außenseitig an einer konzentrisch dazu angeordneten Hülse (9) befestigt ist, die die Spiralfeder (7) mantelseitig umschließt, wobei die Hülse (9) eine Außenverzahnung aufweist, die einen Zahnkranz (10) einer Spindelmutter (6) oder einer Gewindespindel (13) kämmt, die axial verstellbar in der Spindelmutter (6) gelagert ist und ein Druckstück (5) trägt, das an einer Bremsbacke anliegt.

2. Scheibenbremse nach Anspruch 1, **dadurch gekennzeichnet, dass** die Blockiereinrichtung (15) eine Scheibe (16) aufweist, die mit einer Planverzahnung (19) versehen ist, die im Blockierfall in eine ortsfeste Sperrverzahnung (20) eingreift.

3. Scheibenbremse nach Anspruch 2, **dadurch gekennzeichnet, dass** die Scheibe (16) mittels eines Mitnehmers (18) der Zuspanneinrichtung (2) entriegelbar ist.

4. Scheibenbremse nach einem der Ansprüche 2 oder 3, **dadurch gekennzeichnet, dass** die Scheibe (16) axial verschiebbar, jedoch verdrehgesichert auf einer Welle (11) gelagert ist, die parallel oder etwa parallel zur Zustellrichtung der Zuspanneinrichtung (2) verläuft.

5. Scheibenbremse nach einem der Ansprüche 2-4, **dadurch gekennzeichnet, dass** die Scheibe (16) verdrehsicher und axial verschiebbar gelagert ist.

6. Scheibenbremse nach Anspruch 4, **dadurch gekennzeichnet, dass** die Scheibe (16) auf einer Keilwelle (21) der Welle (11) gelagert ist.

7. Scheibenbremse nach Anspruch 3, **dadurch gekennzeichnet, dass** der Mitnehmer (18) der Zuspanneinrichtung (2) in eine umlaufende Nut (17) der Scheibe (16) eingreift.

8. Scheibenbremse nach Anspruch 3, **dadurch gekennzeichnet, dass** die Höhe der Zähne der Planverzahnung (19) bzw. der Sperrverzahnung (20) abhängig ist vom Verhältnis des Hubes des Mitnehmers (18) zum entsprechenden Verstellweg der Gewindespindel (13).

9. Scheibenbremse nach Anspruch 2, **dadurch gekennzeichnet, dass** die Höhe der Zähne der Planverzahnung (19) bzw. der Sperrverzahnung (20) etwa dem Soll-Maß des Lüftspiels entspricht.

10. Scheibenbremse nach einem der vorhergehenden Ansprüche, **dadurch gekennzeichnet, dass** der Kraftspeicher zwischen zwei Spindelmuttern (6) angeordnet ist und mit diesem drehbar in Eingriff steht.

11. Scheibenbremse nach einem der vorhergehenden Ansprüche, **dadurch gekennzeichnet, dass** diese als Festsattelbremse ausgebildet ist, wobei beidseitig der Bremsscheibe eine Nachstellvorrichtung (4) vorgesehen ist, die über einen gemeinsamen Kraftspeicher antreibbar sind.

12. Scheibenbremse nach Ansprüche 4 und 11, **dadurch gekennzeichnet, dass** die beidseitigen Nachstellvorrichtungen (4) über die als Koppelwelle ausgebildete Welle (11) in Wirkverbindung stehen, wobei die Welle (11) zwei Zahnräder (12) aufweist, von denen jeweils eins in einen Zahnkranz (10) der zugeordneten Nachstellvorrichtung (4) eingreift.

13. Scheibenbremse nach Anspruch 12, **dadurch gekennzeichnet, dass** zwischen einem Zahnrad (12) der Welle (11) und der Scheibe (16) eine Druckfeder (22) auf der Welle geführt ist, mit der die Scheibe (16) in eine Blockierposition drückbar ist.

14. Scheibenbremse nach einem der vorhergehenden Ansprüche, **dadurch gekennzeichnet, dass** der Kraftspeicher durch Zurückdrehen der Spindelmutter (6) oder der Gewindespindel (13) aufladbar ist.

15. Scheibenbremse nach einem der vorhergehenden Ansprüche, **dadurch gekennzeichnet, dass** die Scheibenbremse als Schiebe- oder Schwenksattelbremse ausgebildet ist und einseitig der Bremsscheibe wenigstens eine der Nachstellvorrichtungen (4) aufweist.

## Claims

1. Disk brake, especially for utility vehicles, with a brake caliper (1) engaging over at least some sections of the outer circumference of a brake disk, an application device (2) arranged completely or partially in the brake caliper (1) for applying the brake, and a readjusting system (3) arranged in the brake caliper (1), comprising at least one readjusting device (4) in the form of a rotary device for adjusting the lifting clearance between brake shoes and the brake disk, wherein a rechargeable energy accumulator comprising a spiral spring (7) is provided as drive for the readjusting device (4), and wherein the actuation of the energy accumulator within a nominal measure of the lifting clearance can be blocked by means of a blocking device (15), **characterised in that** the spiral spring (7) is secured to a stationary pin (8) at its centre and to a sleeve (9) arranged concentrically thereto at its outer side, which encloses the spiral spring (7) on the shell side, wherein the sleeve (9) has an outer gearing meshing with a gear ring (10) of a spindle nut (6) or a threaded spindle (13), which is mounted in the spindle nut (6) in an axially displaceable manner and which carries a pressure piece (5) abutting a brake shoe.

2. Disk brake according to claim 1, **characterised in that** the blocking device (15) has a disk (16) provided with a planar gearing (19), which engages a stationary blocking gearing (20) in the blocking case.

3. Disk brake according to claim 2, **characterised in that** the disk (16) can be released by means of a catch (18) of the application device (2).

4. Disk brake according to one of claims 2 or 3, **characterised in that** the disk (16) is mounted on a shaft (11) in an axially displaceable manner, but secured against rotation, which shaft runs parallel or approximately parallel to the feed direction of the application device (2).

5. Disk brake according to one of claims 2 - 4, **characterised in that** the disk (16) is mounted in a manner which is secured against rotation and in an axially displaceable manner.

6. Disk brake according to claim 4, **characterised in that** the disk (16) is mounted on a spline shaft (21) of the shaft (11).

7. Disk brake according to claim 3, **characterised in that** the catch (18) of the application device (2) engages a revolving groove (17) of the disk (16).

8. Disk brake according to claim 3, **characterised in that** the height of the tEeth of the planar gearing (19) or of the blocking gearing (20) is dependent on the ratio of the lift of the catch (18) to the corresponding adjustment path of the threaded spindle (13).

9. Disk brake according to claim 2, **characterised in that** the height of the teeth of the planar gearing (19) or the blocking gearing (20) approximately corresponds to the nominal measure of the lifting clearance.

10. Disk brake according to one of the preceding claims, **characterised in that** the energy accumulator is arranged between two spindle nuts (6) and is in rotary engagement therewith.

11. Disk brake according to one of the preceding claims, **characterised in that** it is formed as a fixed caliper brake, wherein a readjusting device (4) is provided on both sides of the brake disk, which can be driven by a common energy accumulator.

12. Disk brake according to claims 4 and 11, **characterised in that** the readjusting devices (4) on both sides are in operative connection via the shaft (11) formed as a coupling shaft, wherein the shaft (11) has two gears wheels (12), one of which respectively engaging a gear ring (10) of the associated readjusting device (4).

13. Disk brake according to claim 12, **characterised in that** a compression spring (22) is guided on the shaft between a gear wheel (12) of the shaft (11) and the disk (16), with which the disk (16) can be pressed into a blocking position.

14. Disk brake according to one of the preceding claims, **characterised in that** the energy accumulator can be charged by turning back the spindle nut (6) or the threaded spindle (13).

15. Disk brake according to one of the preceding claims, **characterised in that** the disk brake is formed as a slipping or hinged caliper disk brake and has at least one of the readjusting devices (4) on one side of the brake disk.

## Revendications

1. Frein à disque, en particulier pour des véhicules utilitaires, comprenant un étrier de frein (1) chevauchant un disque de frein, au moins en parties, le long de la périphérie extérieure du dernier, ainsi qu'un moyen de serrage de frein (2) disposé dans ledit étrier de frein (1), complètement ou en partie, à serrer le frein, au moins un dispositif de rattrapage (4) sous forme d'un système de rattrapage (3) renfermant un moyen rotatif à régler le jeu d'aération entre des mâchoires de frein et ledit disque de frein, à un accumulateur d'énergie rechargeable, qui renferme un ressort en spirale (7), étant disposé en tant que le moyen d'entraînement pour ledit dispositif de rattrapage (4) et à la commande dudit accumulateur d'énergie étant blocable moyennant un dispositif de blocage (15) au-dedans d'une mesure exigée du jeu d'aération, **caractérisé en ce que** ledit ressort en spirale (7) est fixé en son centre à un pivot stationnaire (8) et à son côté extérieur à une douille (9) disposée en position y concentrique, qui entoure ledit ressort en spirale (7) comme une enveloppe, à ladite douille (9) présentant une denture extérieure engrenant dans une couronne dentée (10) d'un écrou de broche (6) ou d'une broche filetée (13), qui est logée dans ledit écrou de broche (6) à réglage axial et porte un élément presseur (5) a'appuyant contre une mâchoire de frein.

2. Frein à disque selon la revendication 1, **caractérisé en ce que** ledit moyen de blocage (15) comprend un disque (16) pourvu d'une denture plane (19), qui s'engrène dans une denture stationnaire de blocage (20) au cas de blocage.

3. Frein à disque selon la revendication 2, **caractérisé en ce que** ledit disque (16) est apte à être desserré moyennant d'un entraîneur (18) dudit moyen de serrage du frein (2).

4. Frein à disque selon une quelconque des revendications 2 ou 3, **caractérisé en ce que** ledit disque (16) est apte à être déplacé en sens axial, en étant arrêté contre une rotation, cependant, à un arbre (11), qui s'étend en parallèle ou presque en parallèle au sens d'approche dudit moyen de serrage de frein (2).

5. Frein à disque selon une quelconque des revendications 2 à 4, **caractérisé en ce que** ledit disque (16) est logé d'une telle manière, qu'il soit protégé contre la rotation et déplaçable en sens axial.

6. Frein à disque selon la revendication 3, **caractérisé en ce que** ledit disque (16) est logé à un arbre cannelé (21) dudit arbre (11).

7. Frein à disque selon la revendication 3, **caractérisé en ce que** ledit entraîneur (18) dudit moyen de serrage de frein (2) s'engrène dans une rainure (17) périphérique (17) dudit disque (16).

8. Frein à disque selon la revendication 3, **caractérisé en ce que** l'hauteur des dents de ladite denture plane (19) ou respectivement de ladite denture de blocage (20) fait fonction du rapport entre de la course dudit entraîneur (18) et la course de réglage correspondante de ladite broche filetée (13).

9. Frein à disque selon la revendication 2, **caractérisé en ce que** l'hauteur des dents de ladite denture plane (19) ou respectivement de ladite denture de blocage (20) correspond environ à la dimension exigée du jeu d'aération.

10. Frein à disque selon une quelconque des revendications précédentes, **caractérisé en ce que** ledit accumulateur d'énergie est disposé entre deux écrous de broche (6), en étant en prise dans les dernière de façon rotative.

11. Frein à disque selon une quelconque des revendications précédentes, **caractérisé en ce que** ce frein est configuré sous forme d'un frein à étrier fixe, à un dispositif de rattrapage respectif (4) étant disposé des deux côtés dudit disque de frein, à ces dispositifs de rattrapage étant aptes à être entraîné via un accumulateur d'énergie commun.

12. Frein à disque selon les revendications 4 et 11, **caractérisé en ce que** lesdits dispositifs de rattrapage (4) des deux côtés se trouvent en connexion opérative via ledit arbre (11) configuré sous forme d'un arbre de couplage, audit arbre (11) présentant deux roues dentées (12), dont une respective s'engrène dans une couronne dentée (10) du dispositif de rattrapage (4) y affecté.

13. Frein à disque selon la revendications 12, **caractérisé en ce qu'**un ressort de pression (22) est guidé audit arbre entre une roue dentée (12) dudit arbre (11) et ledit disque (16), ce ressort servant à presser ledit disque (16) en une position de blocage.

14. Frein à disque selon une quelconque des revendications précédentes, **caractérisé en ce que** ledit accumulateur d'énergie est apte à être chargé en tournant ledit écrou de broche (6) ou ladite broche filetée (13) en retour.

15. Frein à disque selon une quelconque des revendications précédentes, **caractérisé en ce que** le frein à disque este configuré sous forme d'un frein à étrier glissant ou étrier pivotant et présente, d'un côté dudit disque de frein, au moins un desdits dispositifs de rattrapage (4).
